# EUROPÄISCHE PATENTSCHRIFT

(11) **EP 1 210 270 B1**
(45) Veröffentlichungstag und Bekanntmachung des Hinweises auf die Patenterteilung: **09.07.2003**
(21) Anmeldenummer: 00962425.5
(22) Anmeldetag: 01.09.2000
(51) Int. Cl.: B65B 35/30, B65D 25/10

(54) **TRAY ZUR AUFNAHME UND ZUM TRANSPORT VON FLASCHEN**
TRAY FOR COLLECTING AND TRANSPORTING BOTTLES
PLATEAU POUR LA RECEPTION ET LE TRANSPORT DE BOUTEILLES

(30) Priorität: 11.09.1999 DE 29916028 U
(43) Veröffentlichungstag der Anmeldung: 05.06.2002
(73) Patentinhaber: Autefa Automation GmbH, 86316 Friedberg (DE)
(72) Erfinder: HIRSCHEK, Herwig, 86399 Bobingen (DE)
(74) Vertreter: Ernicke, Hans-Dieter, Dipl.-Ing.
(86) Internationale Anmeldenummer: EP0008559
(87) Internationale Veröffentlichungsnummer: WO01019684

(56) Entgegenhaltungen:
- EP-A- 0 113 929
- EP-A- 0 802 119
- WO-A-98/47795

## Beschreibung

Die Erfindung betrifft einen Tray zur Aufnahme und für den Transport von mehreren Flaschen mit den Merkmalen im Oberbegriff des Hauptanspruches.

Ein solcher Tray ist in Verbindung mit einer Flaschenbehandlungsanlage aus der WO98/47795 bekannt. Der Tray hat einen im wesentlichen ebenen Trayboden und drei oder vier umgebende Seitenwände. Die Flaschenbehandlungsanlage ist für beliebige Arten von Flaschen geeignet und vorzugsweise für leere PET-Kunststoffflaschen konzipiert. Sie umfasst ein oder mehrere Sammeleinrichtungen zur Übernahme der zugeführten leeren Flaschen, die dann auf die Trays unter Bildung von Flaschenlagen umgesetzt werden. Hierbei kann auch am Umsetzer ein stationär angetriebener Schieber vorhanden sein, der die Flaschen auf dem ebenen Trayboden zusammenschiebt. Der Schieber kann in einer Ausführungsvariante vom Antrieb abgehängt und als vierte Seitenwand am Tray eingehängt werden. Hierdurch können der Kontakt des Schiebers und seine Führungsfunktion gegenüber den Flaschen verloren gehen. Während des Transportes sollten die Flaschen jedoch möglichst umfassend seitlich geführt sein. Dies ist bei variierenden Flaschenformaten schwierig.

Es ist Aufgabe der vorliegenden Erfindung, einen Tray mit verbesserten Führungseigenschaften aufzuzeigen.

Die Erfindung löst diese Aufgabe mit den Merkmalen im Hauptanspruch.
Die am Tray angeordnete Klemmeinrichtung hat den Vorteil, dass sie zusammen mit den Seitenwänden auch während des Traytransportes eine umfassende Führung der Flaschen aufrecht erhält. Durch die Beweglichkeit der Klemmvorrichtung ist eine Anpassung an unterschiedliche Flaschenformate möglich. Dies erlaubt den Einsatz von Universal-Trays für alle Flaschenarten. Die Trays können dabei auch eine gewisse Übergröße haben.

Die Klemmeinrichtung kann in Verbindung mit einer Schrägstelleinrichtung für die Trays eingesetzt werden. Durch die Schrägstelleinrichtung ist es möglich, die Flaschen, insbesondere neu gefertigte PET-Flaschen, in einer besonders schonenden Weise umzusetzen. Die frisch von einer Blasmaschine angelieferten neuen PET-Flaschen haben noch eine gewisse Labilität und neigen ausserdem dazu, bei Kontakt aneinander zu haften. Dies bringt Probleme beim dichten Aneinandersetzen der PET-Flaschen mit sich, weil wegen des Klebeeffektes die Flaschen nicht beim Umsetzen und Absetzen in Längsrichtung aneinander entlanggleiten können. Die Schrägstelleinrichtung löst dieses Problem. Für die wegen ihres geringen Gewichtes besonders labilen PET-Flaschen ist die Klemmeinrichtung besonders vorteilhaft.

Die Klemmeinrichtung kann in unterschiedlicher Weise ausgebildet sein, wobei sich aus Kosten- und Bauaufwandsgründen eine einfache Ausführungsform mit Schieber und Feder empfiehlt. Hierbei ist es auch möglich, das Klemmelement in eine Ruhestellung zu bewegen, in der eine am Tray befindliche seitliche Abschiebeöffnung freigegeben wird. Hierdurch kann die ganze Flaschenlage auf einmal durch ein geeignetes Werkzeug beim Entladen abgeschoben werden. Die Klemmeinrichtung ist dazu auch in geeigneter Weise steuerbar, ggf. durch externe Führungskulissen oder sonstige Antriebe.

Eine weitere vorteilhafte Bauvariante stellen kistenförmige Trays mit einer integrierten Klemmeinrichtung mit einem federbelasteten schwenkbaren Klemmbügel dar. Hier können ebenfalls mit den gleichen Trays unterschiedliche Flaschenformate verwendet werden. Die kistenförmigen Trays haben den weiteren Vorteil, dass sie sich stapeln lassen, was auch Verbesserungen beim Transport und bei der Handhabung innerhalb einer Flaschenbehandlungsanlage mit sich bringt. Durch die Stapelbildung kann die Kapazität der Transporteinrichtung erhöht werden, wodurch andererseits auch der Flächenbedarf verringert wird. Über zusätzliche Traykreisläufe mit Traystaplern und Trayentstaplern können Flaschenerzeuger und andere Bearbeitungsstationen in großer Zahl und auf kleinem Raum an die Transporteinrichtung angeschlossen werden. Die Traykreisläufe sind dabei über Nebenstrecken mit Weichen an die Hauptstrecke oder Umlaufstrecke der Transporteinrichtung angeschlossen, was Stauprobleme vermeidet und die Transportkapazität sowie die Transportgeschwindigkeit deutlich erhöht.

Ferner ist die Anordnung einer Vereinzelungsvorrichtung mit einer Schnecke vor dem Umsetzer von Vorteil. Hierdurch können die im endlosen Strang vom Flaschenförderer zugeführten Flaschen zum einen voneinander separiert werden, was die bereits vorerwähnten Probleme mit der Labilität und dem Haftkontakt der frisch hergestellten PET-Flaschen lösen hilft. Außerdem können die Flaschen in eine der Traygröße entsprechende Flaschenreihe mit optimierter Flaschenzahl und gleichmäßigen optimierten Abständen aufgeteilt und für den Umsetzvorgang bereit gestellt werden. Dies ermöglicht eine optimale Packungsdichte der Flaschenreihe auf dem Tray und eine Reihenpositionierung im Lückenschluss.

In den Unteransprüchen sind vorteilhafte Ausgestaltungen der Trays angegeben.

Die Erfindung ist in den Zeichnungen beispielsweise und schematisch dargestellt. Im einzelnen zeigen:
- Figur 1:: eine schematische Draufsicht auf eine Flaschenbehandlungsanlage mit einer Sammeleinrichtung, einem Zwischenlager, einem Palettierer und mehreren Trays,
- Figur 2:: eine perspektivische Ansicht einer Sammeleinrichtung mit einem Tray und einer Klemmeinrichtung,
- Figur 3:: eine Draufsicht auf eine andere Bauvariante der Sammeleinrichtung mit Tray und Klemmeinrichtung,
- Figur 4 und 5:: verschiedene Umsetz- und Belademöglichkeiten für die Flaschen auf dem Tray mit der Klemmeinrichtung,
- Figur 6:: eine vergrößerte und abgebrochene Detaildarstellung der Klemmeinrichtung,
- Figur 7:: eine Drausicht auf ein Tray mit einer Klemmeinrichtung mit zwei Klemmelementen,
- Figur 8:: eine schematische Draufsicht auf eine Bauvariante der Flaschenbehandlungsanlage unter Verwendung von Traystapeln,
- Figur 9:: ein Traystapel in Seitenansicht,
- Figur 10:: eine abgebrochene Draufsicht auf einen kistenförmigen Tray mit einer anderen Klemmeinrichtung,
- Figur 11:: eine geschnittene Seitenansicht der Anordnung von Figur 10 gemäß Schnittlinie XI-XI,
- Figur 12:: eine schematische Draufsicht auf eine dem Umsetzer vorgeschaltete Vereinzelungsvorrichtung mit Schnecke und
- Figur 13:: eine Seitenansicht einer Bauvariante der Schrägstelleinrichtung von Figur 4 und 5.

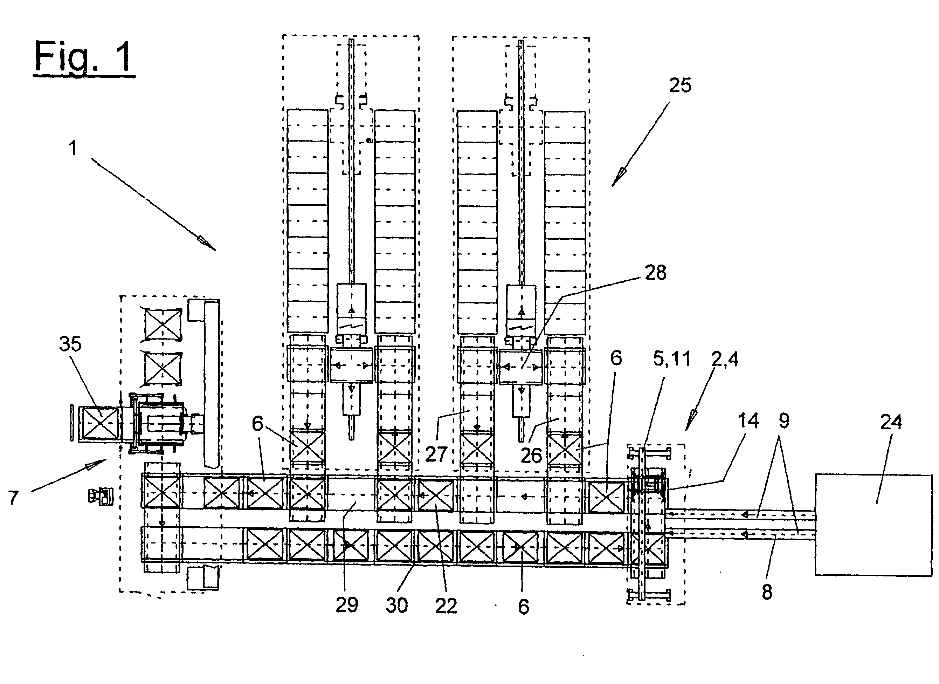

Figur 1 zeigt in Form eines Ausführungsbeispiels eine Flaschenbehandlungsanlage (1), die hier aus einer Sammeleinrichtung (4) mit einem Umsetzer (5), mehreren Zwischenträgern oder sogenannten Trays (6) für die Flaschen (3), einer Transporteinrichtung (22), mindestens einem Zwischenlager (25) für leere oder mit Flaschen (3) beladene Trays (6) und einem Palettierer (7) besteht.

Das Zwischenlager (25) ist zwischen der Sammeleinrichtung (4) und dem Palettierer (7) angeordnet. Für den Transport der einzeln beweglichen Trays (6) ist eine Transporteinrichtung (22) vorgesehen, die vorzugsweise im Kreislauf arbeitet und einen Vorlauf (29) und einen Rücklauf (30) aufweist. Die Transporteinrichtung (22) verbindet die Sammeleinrichtung (4) mit dem Palettierer (7). Ausserdem ist auch das Zwischenlager (25) an die Transporteinrichtung (22) und dabei vorzugsweise an deren Vorlauf (29) angeschlossen.

Das Zwischenlager (25) kann in beliebig geeigneter Weise ausgebildet sein, z.B. als Hochregallager mit ein oder mehreren geeigneten Regalförderzeugen (28) und einer Eingabe (26) und einer Ausgabe (27) für die beladenen Trays (6), die beide vorzugsweise an den Vorlauf (29) angeschlossen sind.

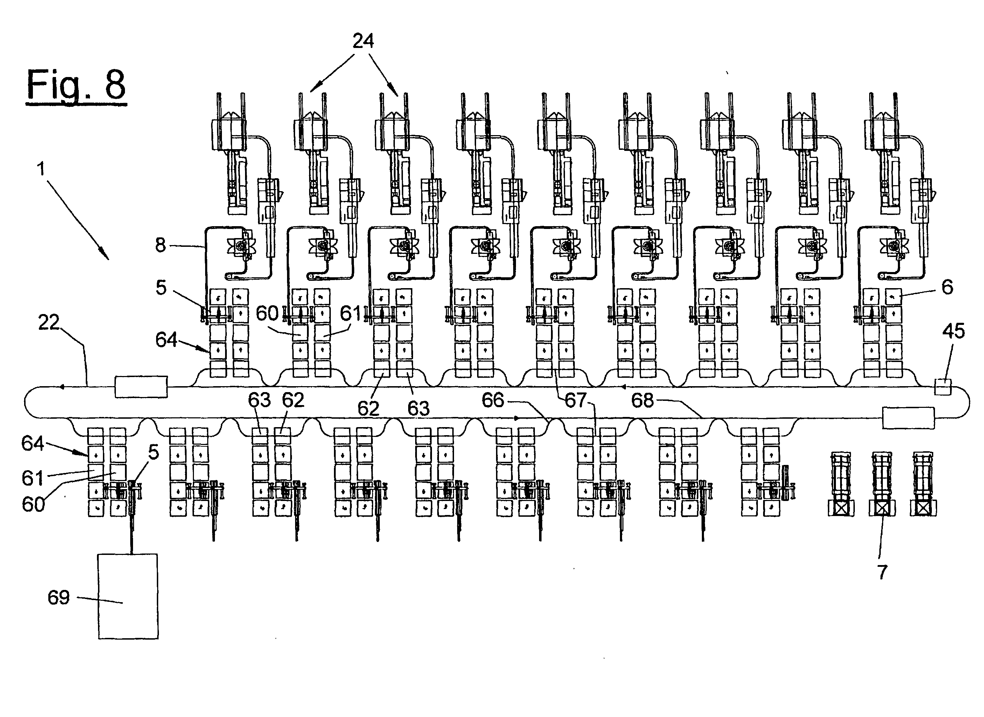

Alternativ kann die Flaschenbehandlungsanlage (1) auch eine andere Zahl und Anordnung der genannten Komponenten besitzen. In einer weiteren Abwandlung ist es möglich, auf das Zwischenlager (25) zu verzichten und eine entsprechende längere Transportvorrichtung (22) als Puffer vorzusehen. Desgleichen kann auch auf den Palettierer (7) verzichtet werden. Alternativ oder als zusätzliche Anlagenkomponente können auch eine Wasch- und Füllanlage oder dgl. andere Einrichtungen (nicht dargestellt) vorhanden sein. Die nachfolgend näher beschriebene Figur 8 zeigt eine weitere Bauvariante der Flaschenbehandlungsanlage (1). Die Ausbildung der Flaschenbehandlungsanlage (1) und ihre Komponenten kann somit in weiten Grenzen und in beliebiger Weise variiert werden.

In den gezeigten Ausführungsformen ist die Flaschenbehandlungsanlage (1) für beliebige Flaschen geeignet. Eine besondere Eignung besteht für PET-Kunststofflaschen, die insbesondere durch mindestens eine vorgeschaltete Blasmaschine (24) hergestellt und über ein oder mehrere kurze Flaschenförderer (8) der Sammeleinrichtung (4) zugeführt werden. Hierbei handelt es sich um leere PET-Flaschen. Alternativ können es auch Glasflaschen sein. Zudem können die Flaschen (3) auch gefüllt sein. Variabel ist ferner Zahl und Ausbildung der Flaschenerzeuger (24). Der oder die Flaschenerzeuger (24) können in einer weiteren Abwandlung auch durch einen Entpacker oder eine sonstige Vorrichtung ersetzt oder ergänzt werden, die leere oder gefüllte Flaschen herstellt oder einem Vorrat entnimmt oder auf beliebige sonstige Weise aufnimmt und der Sammeleinrichtung (4) zuführt.

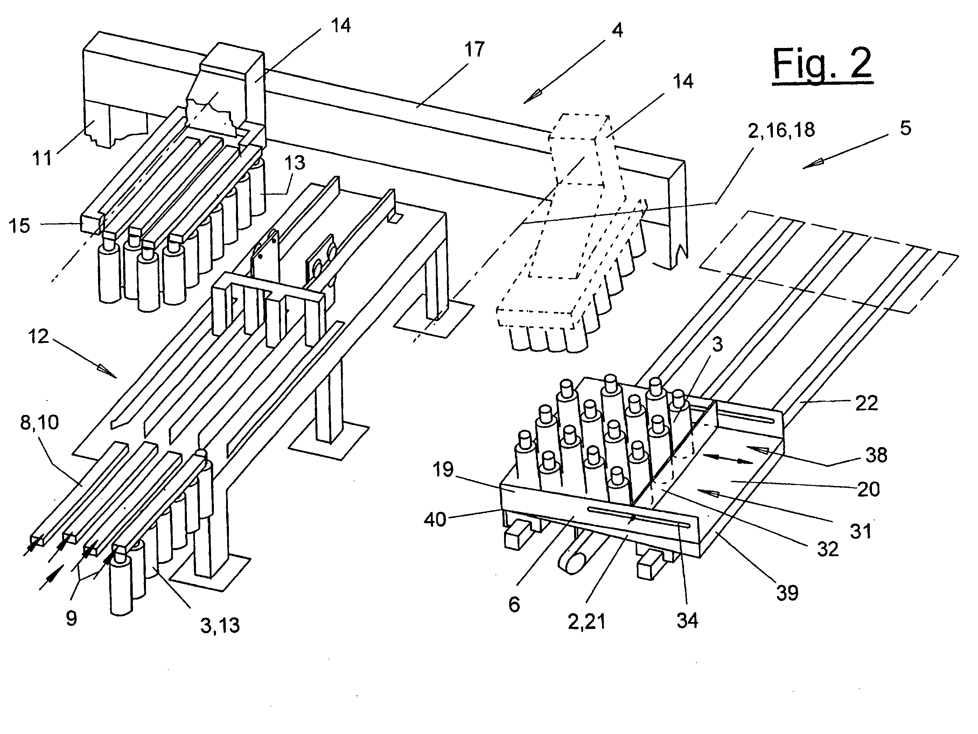

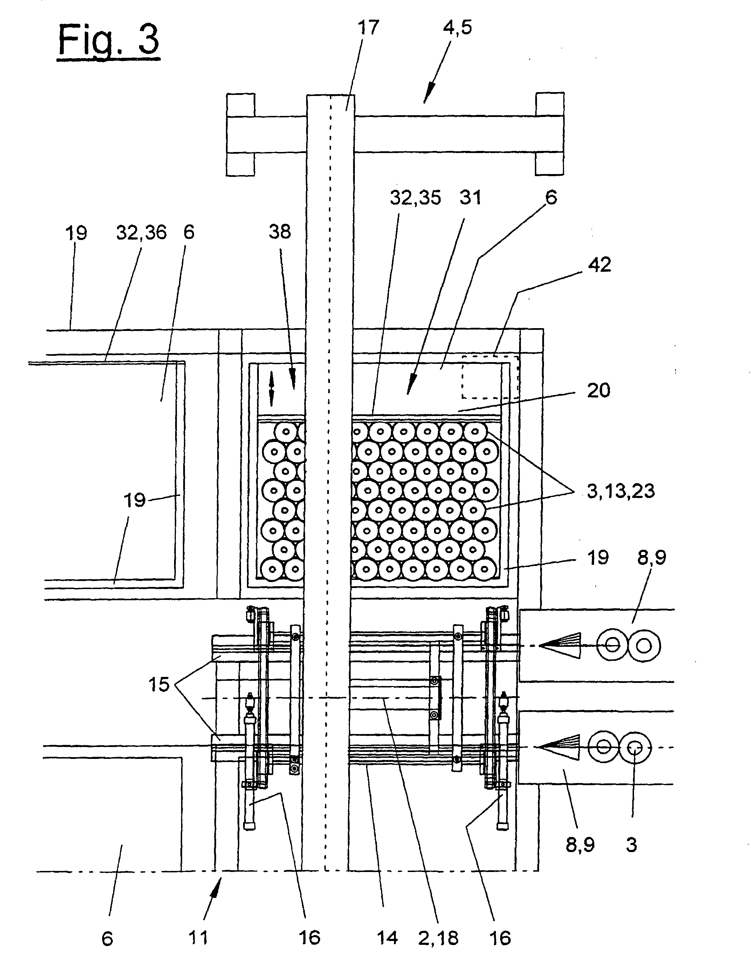

Wie Figur 2 und 3 verdeutlichen, besitzt die Sammeleinrichtung (4) einen Umsetzer (5), mit dem die über den Flaschenförderer (8) in ein oder mehreren Strängen (9) zugeführten Flaschen (3) in ein oder mehreren Flaschenreihen (13) aufgenommen und auf einen oder mehrere seitlich wartende Trays (6) unter Bildung von mehrreihigen Flaschengruppen oder Flaschenlagen (23) umgesetzt werden. Die Flaschenlage (23) hat vorzugsweise die Größe einer Palette, kann aber auch beliebig anders dimensioniert sein. Die Trays (6) sind im wesentlichen wannenartig ausgebildet und haben im Innenbereich keine Flaschenführungen, wie Pins oder dgl..

Der Umsetzer (5) ist als Roboter (11) ausgebildet, der eine oder mehrere entlang einer Traverse (17) quer verschiebliche Greifeinrichtungen (14) aufweist. Die Greifeinrichtungen (14) sind als sogenannte Greiferköpfe ausgeführt, die jeweils ein oder mehrere Flaschenführungen oder Reihengreifer (15) zur Aufnahme jeweils einer Flaschenreihe (13) aufweisen. Hierbei kann eine Verstelleinrichtung vorhanden sein, die zum einen eine gegenseitige Querverschiebung der Reihengreifer (15) ermöglicht.

In der Ausführungsform von Figur 2 werden die in vier Strängen (9) zugeführten Flaschen (3) am Ende (10) des Flaschenförderers (8) an einen Reihenaufnahme oder einen Stautisch (12) übergeben, wo sie von der Greifeinrichtung (14) in vier Flaschenreihen (13) aufgenommen und auf den Tray (6) umgesetzt werden.

In der Bauvariante von Figur 3 hat die Greifeinrichtung (14) zwei Reihengreifer (15), in die die Flaschen (3) direkt vom Flaschenförderer (8) überschoben werden. Die Reihengreifer (15) sind zu diesem Zweck für die Flaschenübernahme entsprechend gegenseitig distanziert und zu den Flaschenförderern (8) ausgerichtet.

Die Flaschenbehandlungsanlage (1) und deren Komponenten, insbesondere die Sammeleinrichtung (4), können in der vorbeschriebenen Grundkonzeption entsprechend der DE-U 297 07 324 ausgebildet sein.

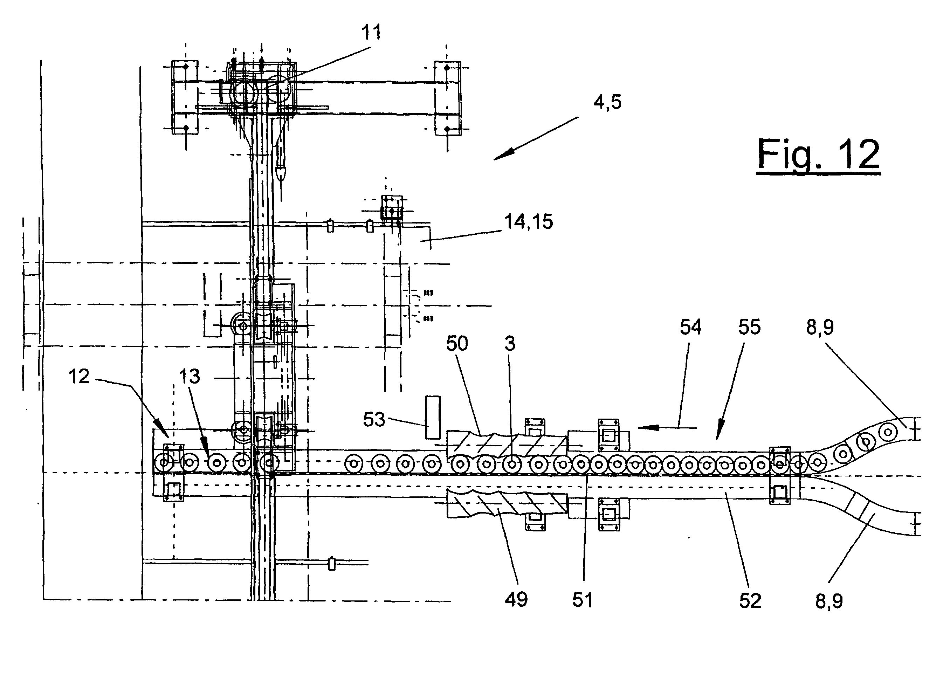

In einer bevorzugten Ausführungsform kann gemäß Figur 12 vor dem Umsetzer (5) mindestens eine Vereinzelungsvorrichtung (49) angeordnet sein, die vorzugsweise ein oder mehrere Schnecken aufweist und die die vom Flaschenförderer (8) zugeführten Flaschen (3) in Förderrichtung (54) voneinander trennt und dann auch in einen vorbestimmbaren Abstand zueinander bringt. Hierbei ist die Schnecke (49) vorzugsweise konisch ausgebildet und hat entsprechend ausgeformte Gänge (50). Die parallel zur Förderrichtung (54) ausgerichtete Schnecke (49) wirkt dabei entlang einer Gleitstrecke (52) für die Flaschen (3), welche auch als Plattenbandförderer ausgebildet sein kann, mit einer gegenüber liegenden Wand (51) zusammen, an der die Flaschen (3) entlanggeschoben werden. Vor der Schnecke (49) befindet sich eine Staustrecke (55) zur Aufnahme der vom Flaschenförderer (8) kommenden Flaschen (3). In Förderrichtung (54) hinter der Schnecke (49) ist eine Zähleinrichtung (53) und eine anschließende Reihenaufnahme (12) für eine genau abgezählte und positionierte Flaschenreihe (13) angeordnet.

Die Schnecke (49) hat nicht nur die Funktion, die frisch hergestellten labilen PET-Flaschen zu separieren. Sie bringt sie darüber hinaus in den vorerwähnten Abstand zueinander. Ferner zählt sie die Flaschen (3), bildet die Flaschenreihe (13) und bringt sie mit einem nachgeschalteten Förderer in die umsetzgerechte Position an der Reihenaufnahme (12). Der Flaschenabstand ist abhängig vom Flaschenformat und ist auf die Größe der Trays (6) und auf die dementsprechende Länge einer in den Tray (6) passenden Flaschenreihe (13) abgestimmt. Der von der Schnecke (49) vermittelte Flaschenabstand ist dabei so gewählt, dass die Zahl und der gleichmäßige Abstand der in eine Flaschenreihe auf den Tray (6) passenden Flaschen (3) optimiert wird. Bei einem Wechsel des Flaschenformats kann auch die Schecke (49) ausgetauscht werden.

Die Flaschenreihen (13) werden auf die Trays (6) mit einem abwechselnden gegenseitigen axialen Versatz geladen und im Lückenschluss aneinander gestellt. Hierbei wird von dem Umsetzer (5) bzw. der Greifeinrichtung (14) in Figur 12 jeweils eine komplette Flaschenreihe (13) gegriffen, welche zuvor von der Schnecke (49) in entsprechender Flaschenzahl und -positionierung an der Reihenaufnahme (12) bereit gestellt wird. In der gezeigten Ausführungsform von Figur 12 sind zwei Schnecken (49) für zwei Flaschenförderer (8) bzw. Stränge (9) vorhanden. Diese Zahl kann beliebig variieren.

Die Sammeleinrichtung (4) besitzt vorzugsweise eine Schrägstelleinrichtung (2) für die Flaschen (3). Die Schrägstelleinrichtung (2) kann verschiedene, nachstehend näher beschriebene Bestandteile haben. Sie dient dazu, die Flaschen (3) schräg auf den Trays (6) umzusetzen und dort weiter in Schräglage zu halten.

Zum einen kann die Schrägstelleinrichtung (2) Schrägsteller (21) aufweisen, mit denen der Trayboden (20) der Trays (6) schräg gestellt wird. Die Schräglage kann eine beliebige Größe haben. Bevorzugt ist ein Winkel von ca. 10° bis 20° gegen die Horizontale. Die Schräglage hat vorzugsweise eine Neigungs- oder Drehachse, die in der gezeigten Ausführungsform längs der Bewegungsrichtung der Transporteinrichtung (22) und quer zur Traverse (17) ausgerichtet ist.

In der gezeigten Ausführungsform von Figur 2 sind Schrägsteller (21) an den Trays (6) angeordnet. Sie bestehen aus Unterlegkeilen, die an der Unterseite eine horizontale Kontakt- und Transportfläche für die Transporteinrichtung (22) bieten und die mit ihrer schrägen Oberseite den Trayboden (20) in der gewünschten Schrägstellung positionieren. Alternativ oder zusätzlich können Schrägsteller (21) auch an der Transporteinrichtung (22) und den anderen Komponenten der Flaschenbehandlungsanlage (1), insbesondere dem Zwischenlager (25) und dem Palettierer (7) vorhanden sein (nicht dargestellt). Durch entsprechende Schrägsteller im Zwischenlager (25) ist es möglich, die Trays (6) in Schräglage und mit minimalem Abstand übereinander zu lagern. Bei der anderen Ausführungsform mit Unterlegkeilen (21) an den Trays (6) ist die Lagerhöhe etwas größer.

Die Schrägstelleinrichtung (2) kann alternativ oder zusätzlich ein oder mehrere Kippachsen (18) und eine entsprechende Schwenkeinrichtung (16) aufweisen, die bevorzugt und beispielsweise an der Greifeinrichtung (14) angeordnet sind. Hierdurch kann die Greifeinrichtung (14) die in Figur 2, 4 und 5 dargestellte Schräglagen einnehmen. Im bevorzugten Ausführungsbeispiel ist eine Kippachse (18) vorhanden, die horizontal und längs der Flaschenreihen (13) beziehungsweise der Längsachse der Transporteinrichtung (22) ausgerichtet ist. Die Kippachse (18) erstreckt sich außerdem parallel zu der Neigungsachse der Schrägsteller oder Unterlegkeile (21).

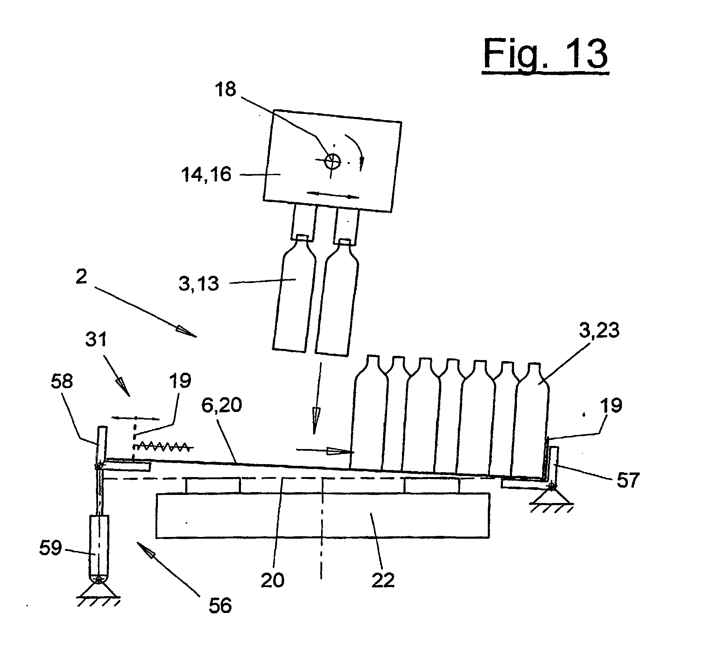

Figur 13 zeigt eine Bauvariante, bei der die Schrägstelleinrichtung (2) temporär wirksam ist und den Trägerboden (20) vorzugsweise nur beim Umsetz- und Beladevorgang am Umsetzer (5) schräg stellt. Hierfür weist die Schrägstelleinrichtung (2) eine Kippeinrichtung (56) auf, die den Tray (6) mit zwei Greifern (57,58) erfasst und über einen vorzugsweise einseitigen Antrieb (59) zumindest an einer Seite anhebt und schräg stellt. Der Tray (6) kippt dabei um die Schwenkachse des Greifers (57), die zugleich die Neigungsachse des Trays (6) darstellt. Alternativ können beide Greifer (57,58) mit Antrieben (59), z.B. den gezeigten Zylindern, versehen sein und können den Tray (6) für die Schrägstellung auch von der Transporteinrichtung (22) abheben.

Wie Figur 2 bis 5 verdeutlichen, haben die Trays (6) einen im wesentlichen ebenen, glatten und rechteckigen Trayboden (20), auf dem die Flaschen (3) ungehindert rutschen können. Ferner befinden sich an zumindest drei umlaufenden Seiten hochstehende Seitenwände (19). Hierbei befindet sich am geneigten unteren Trayrand (40), der auch die Neigungsachse bildet, und an den seitlichen Trayrändern jeweils eine Seitenwand (19). Der durch die Schrägstellung angehobene obere Trayrand (39) hat vorzugsweise keine Seitenwand. Alternativ kann hier auch eine ggf. verstellbare Seitenwand vorhanden sein.

Die Trays (6) haben eine einheitliche Größe für unterschiedliche Flaschenformate. Vorzugsweise haben dabei die Trayböden (20) eine gewisse Übergröße, die auch etwas größer als die geplante Flaschenlage (23) ist. Die Übergröße ist vor allem in der Länge des Traybodens (20) zwischen dem unteren und dem oberen geneigten Trayrand (39,40) vorhanden. Dies ermöglicht eine sichere Aufnahme aller vorkommenden Flaschenformate, die zudem durch die Schräglage der Flaschen (3) zuverlässig aneinander geführt sind.

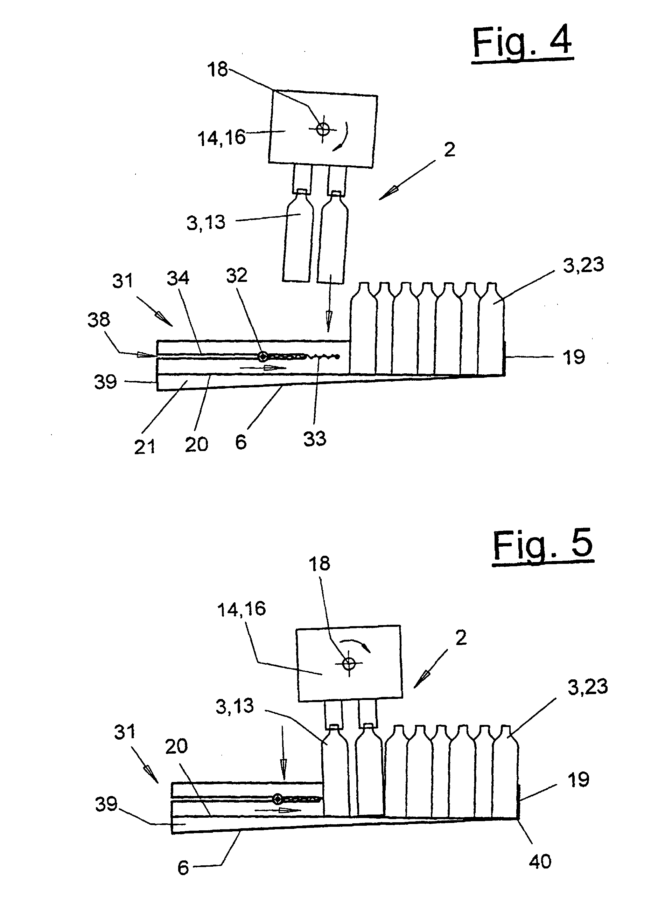

Figur 4, 5 und 13 verdeutlichen die Funktionen und Wirkungen der Schrägstelleinrichtung (2). Durch die gegenüber der Horizontalen geneigten Trayböden (20) rutschen die Flaschen (3) durch ihr Eigengewicht zusammen und führen sich gegenseitig. Hierbei können die Flaschenreihen (3) beim Umsetzen auf Lücke angeordnet werden. Figur 3 verdeutlicht diese Reihenanordnung innerhalb der Flaschenlage (23). Die Flaschen (3) werden innerhalb der Lage (23) trotz ebener Trayböden (20) zuverlässig aneinander geführt und gehalten.

Durch die Schräglage der Flaschen (3) sind auch unterschiedliche Techniken beim Umsetzen und Absetzen der Flaschen (3) auf den Trays (6) möglich. Figur 4, 5 und 13 verdeutlichen hierzu die Varianten.

In der Variante von Figur 4 werden die vorzugsweise in der üblichen vertikalen Lage vom Flaschenförderer (8) zugeführten Flaschenreihen (13) vor dem Absetzen auf dem Tray (6) durch eine Drehbewegung der Greifeinrichtung (14) um die Kippachse (18) schräg gestellt. Die Schrägstellung entspricht hierbei der Neigung des Traybodens (20). Anschließend werden die Flaschenreihen (13) mit einer Bewegungsrichtung senkrecht zum Trayboden (20) abgesenkt. Dieses Absenken geschieht mit etwas Abstand zu den bereits auf dem Trayboden (20) versammelten Flaschen (3), wobei auch die in den Reihengreifern (15) gehaltenen Flaschenreihen (13) einen gewissen seitlichen Abstand haben können. Nach dem Absetzen auf dem Trayboden (20) werden die Flaschenreihen (13) von der Greifeinrichtung (14) losgelassen und rutschen dann aufgrund der Schräglage und unter Einwirkung ihres Eigengewichtes schräg auf dem Trayboden (20) nach unten und kommen in Anlage zu den bereits versammelten Flaschen (3). Die Greifeinrichtung (14) schwenkt anschließend wieder in ihre vertikale Ausgangslage zurück, fährt in die Ausgangsstellung und übernimmt die nächsten vom Flaschenförderer (8) bereit gestellten Flaschenreihen (13). Der Umsetzzyklus wiederholt sich dann von Neuem.

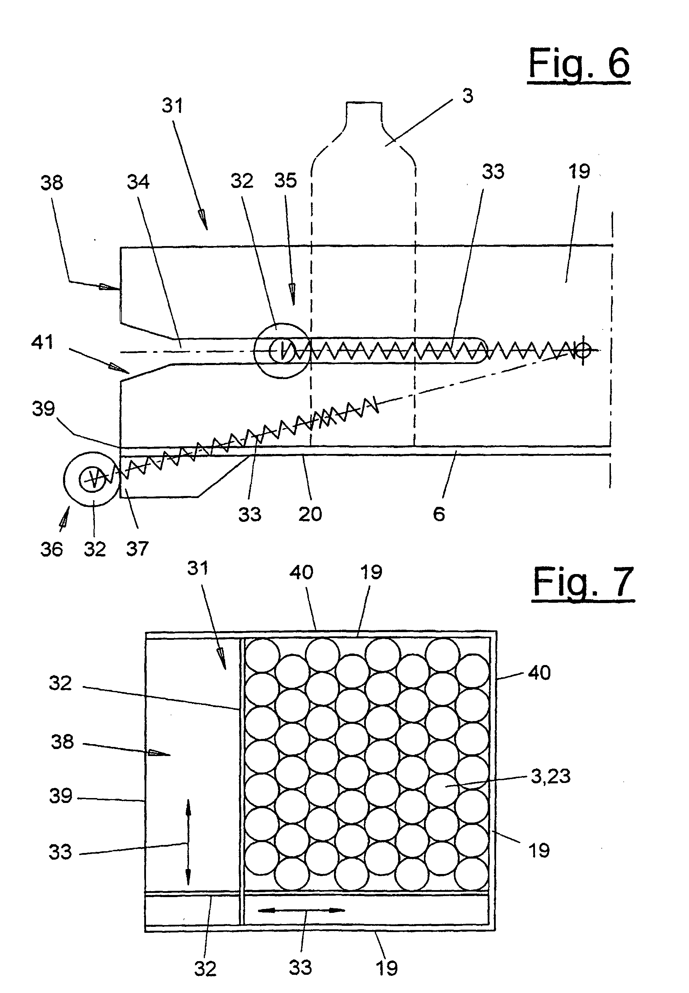

Figur 5 zeigt eine Variante zu dieser Absetztechnik. Hier übernimmt die Greifeinrichtung (14) die vertikal ausgerichteten Flaschenreihen (13) und behält diese Ausrichtung auch beim Umsetzen und Absenken der Flaschenreihen (13) auf dem Trayboden (20) bei. Die Absetzrichtung ist senkrecht und dadurch schräg zum geneigten Trayboden (20) ausgerichtet. Hierbei werden die abzusetzenden Flaschenreihen (13) nahe an die bereits versammelten Flaschen (3) auf dem Tray (6) heranbewegt und mit ihren Unterseiten in unmittelbarer Nachbarschaft zu den Unterseiten der versammelten Flaschen (3) abgesetzt. Durch die Winkelunterschiede sind die Flaschen (3) zumindest im oberen Bereich voneinander distanziert. Allenfalls besteht im Boden- oder Fußbereich ein Berührungskontakt zwischen den Flaschen (3), der allerdings nicht schädlich ist. In der bevorzugten Ausführungsform sind die abgesetzten Flaschen jedoch ein kleines Stück im Fuß- oder Bodenbereich von den versammelten Flaschen (3) distanziert. Sobald die abzusetzenden Flaschen (3) den Trayboden (20) berühren, werden sie durch eine Schwenkbewegung um die Kippachse (18) und ggf. auch eine Verschiebebewegung der Greifeinrichtung (14) zu den bereits versammelten Flaschen (3) hinbewegt und mit diesen in Kontakt gebracht. Anschließend werden sie von der Greifeinrichtung (14) freigegeben, die dann zurückschwenkt, in die Ausgangsstellung zurückfährt und den Umsetzzyklus wiederholt. Bei dieser Bauform, wie auch bei der vorbeschriebenen Variante von Figur 4 können die Reihengreifer (15) zumindest beim Absetzen der Flaschen (3) auf dem schrägen Trayboden (20) eine gewisse zusätzliche Winkelbeweglichkeit haben, um eventuelle Toleranzen und Winkelabweichungen auszugleichen.

Bei der Bauvariante von Figur 13 kann der Beladevorgang des temporär schräg gestellten Trays (6) in der zu Figur 4 oder 5 beschriebenen Weise stattfinden. Nach dem Beladevorgang wird der Tray (6) durch Einfahren des Antriebs (59) wieder langsam abgesenkt und auf der Transporteinrichtung (22) abgesetzt. Der Trägerboden (20) nimmt dann die in Figur 13 gestrichelt dargestellte Horizontallage ein. Hierbei drehen sich die abgestellten Flaschen (3) bzw. die Flaschenlage (23) langsam mit. Sie stehen für die anschließenden Transportvorgänge, Lagervorgänge oder sonstigen Behandlungsvorgänge dann im wesentlichen senkrecht. Die Kippeinrichtung (56) gibt in der abgesenkten Ruhestellung den Tray (6) frei, so dass er abtransportiert werden kann. Sobald ein neuer leerer Tray (6) bereit gestellt ist, wird er von der Kippeinrichtung (56) ergriffen, ggf. angehoben und für den Beladevorgang schräg gestellt.

Die Trays (6) haben jeweils eine bewegliche Klemmeinrichtung (31), mit der die Flaschen (3) bzw. die Flaschenlage (23) auf dem Tray (6) in Anlage an den Seitenwänden (19) gehalten und geklemmt werden können. Dadurch wird die Lage der Flaschen (3) auf dem Tray (6) gesichert. Ausserdem können die Trays (6) durch die Klemmeinrichtung (31) für unterschiedliche Flaschenformate benutzt werden. Die Klemmeinrichtung (31) ist vor allem in Verbindung mit der Schrägstelleinrichtung (2) und schräg auf den Trays (6) gehaltenen Flaschen (3) von Vorteil. Sie kann alternativ aber auch für konventionelle Trays (6) in normaler Flaschen- und Trayausrichtung benutzt werden.

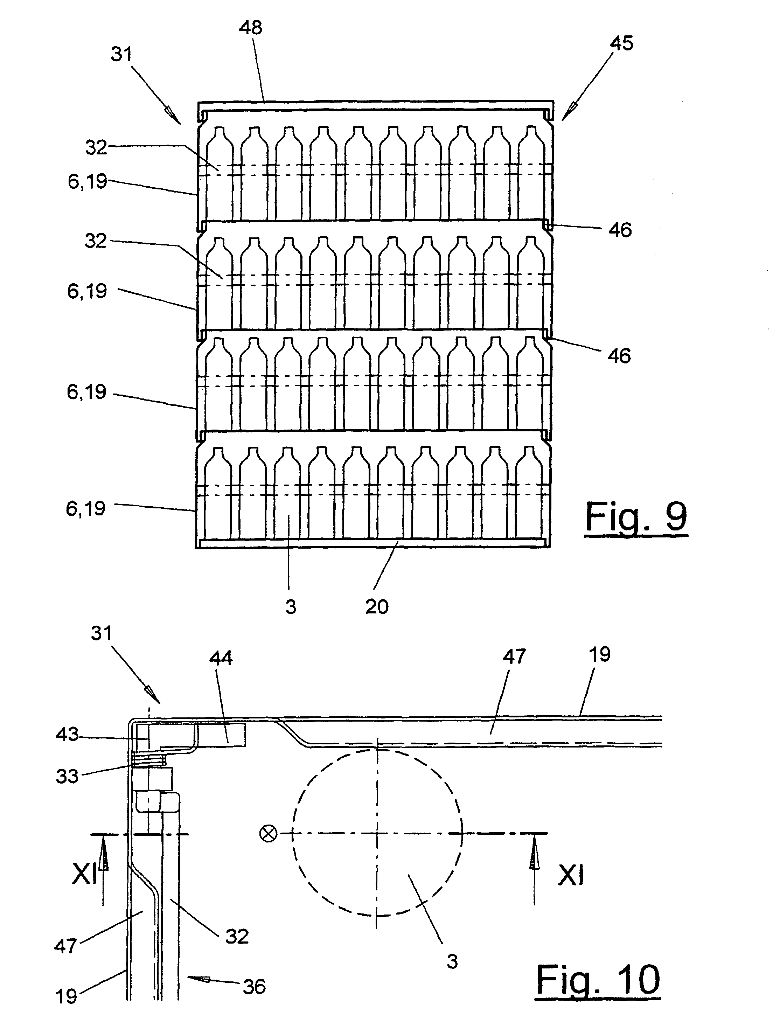

Die Klemmeinrichtung (31) kann in unterschiedlicher Weise ausgebildet sein. Die Ausführungsbeispiele von Figur 2 bis 7 zeigen hierfür einfache Ausführungsformen. In Figur 9 bis 11 ist eine weitere Variante dargestellt.

Die Klemmeinrichtung (31) besitzt ein oder mehrere Klemmelemente (32), die auf die Flaschen (3) einwirken und eine beliebig geeignete Form haben können.

Bei der Bauform von Figur 2 bis 7 handelt es sich um stangen- oder wandförmige Klemmschieber. Die Klemmelemente (32) sind in geeigneter Weise am Tray (6) geführt. In der gezeigten Ausführungsform eines im Grundriss rechteckigen Trays (6) mit drei umlaufenden Seitenwänden (19) befinden sich die Führungen (34) an den parallel laufenden Seitenwänden (19), die sich zwischen dem oberen und unteren Trayrand (39,40) erstrecken. Die Klemmschieber (32) sind hier über Roll- oder Gleitzapfen geführt. Alternativ kann eine Führung auch am Trayboden (20) vorhanden sein.

Die Klemmelemente (32) werden durch eine am Tray (6) angeordnete Zustellvorrichtung (33) vor- und zurückbewegt sowie in seitliche Anlage an die Flaschen (3) gebracht. In einer einfachen Ausführungsform besteht die Zustellvorrichtung (33) aus zwei aussenseitig an den Führungen (34) bzw. deren Seitenwänden (19) angeordneten Federn, die einerseits an einem Fußpunkt an den Seitenwänden (19) und andererseits an den Klemmelementen (32) eingehängt sind. Die Federn (33) sind vorzugsweise aussenseitig angeordnet und als Zugfedern ausgebildet. Sie ziehen das parallel zu den Trayrändern (39,40) ausgerichtete Klemmelement (32) in Richtung zum unteren Trayrand (40). Dabei werden die Flaschen (3) mitgenommen, an die umgebenden Seitenwände (19) angelegt und eingeklemmt. Die Flaschen (3) liegen dabei in der in Figur 3 gezeigten Weise mit optimaler Platzausnützung gegenseitig auf Lücke.

Die Zustellvorrichtung (33) bewegt die Klemmelemente (32) zwischen einer Ruhestellung (36) und einer Arbeitsstellung (35). Die Arbeitsstellung (35) ist die Anlage an den Flaschen (3) in der Ruhestellung (36) befindet sich das Klemmelement außerhalb des Traybodens (20) und ist beispielsweise in der in Figur 6 gezeigten Ausführungsform an einem unterhalb des Traybodens (20) befindlichen Anschlag (37) in Kontakt gebracht. Es wird dort durch die gespannten Federn (33) gehalten. Um diese Stellung zu erreichen, ist der Führungsschlitz (34) am oberen Trayrand (39) offen, so dass das Klemmelement (32) aus der Führung (34) austreten und die gezeigte Stellung einnehmen kann. Es wird dabei an den vertikalen Rändern der Seitenwände (19) entlanggeführt. Für eine erleichterte Rückführung hat der Schlitz (34) eine erweiterte Zugangsöffnung (41).

Das Klemmelement (32) kann durch eine geeignete externe Antriebs- oder Lenkanordnung bei einer Positionierung des Trays (6) an der Sammeleinrichtung (4) aus der Führung (34) in die Ruhestellung (36) gezogen werden. Nach dem Beladen des Trays (6) wird das Klemmelement (32) wieder aus der Ruhestellung (36) gelöst und dann von der Zustellvorrichtung (33) in Anlage an die Flaschen (3) gebracht.

Wie Figur 2 und 3 verdeutlichen, befindet sich durch die nur an drei Seiten vorhandenen Seitenwände (19) am oberen Trayrand (39) eine Abschiebeöffnung (38), die von dem in Arbeitsstellung (35) befindlichen Klemmelement (32) verschlossen und von dem in Ruhestellung (36) befindlichen Klemmelement (32) freigegeben wird. Über diese freie Seite (39) bzw. Abschiebeöffnung (38) kann die Flaschenlage (23) am Palettierer (7) oder einer sonstigen Entladestation über einen geeigneten Schiebegreifer, z. B. einen die Flaschen (3) aussenseitig umgreifenden, verstellbaren Schieberrahmen, vom Trayboden (20) auf einen Sammeltisch, einen Zwischenboden im Palettenstapel der dergleichen anderen Untergrund überschoben werden. Dies erlaubt es, beliebig viele Flaschen mit beliebigen Flaschenformaten unter ständiger Aufrechterhaltung der Führung sicher zu bewegen und zu transportieren.

Bei den in Figur 4 und 5 vorbeschriebenen Beladevorgängen des Trays (6) wird die Klemmeinrichtung (31) zunächst ausser Funktion gesetzt. Hierzu wird in der vorerwähnten Weise das Klemmelement (32) am Anschlag (37) oder in einer beliebigen anderen geeigneten Weise arretiert. Die Flaschen (3) können dann von der Greifeinrichtung (14) ohne Beeinträchtigung durch die Klemmeinrichtung (31) umgesetzt und auf dem Trayboden (20) abgestellt werden.

Wenn der Tray (6) fertig beladen ist, wird die Klemmeinrichtung (31) aktiviert und das Klemmelement (32) in Anlage an die äußere Flaschenreihe gebracht. Der Tray (6) kann dann von der Transporteinrichtung (22) bewegt werden. Zum Entladen des Trays (6) wird die Klemmeinrichtung (31) deaktiviert, indem das Klemmelement (32) in die Ruhestellung (36) gebracht wird. Die Flaschenlage (23) kann dann in der vorerwähnten Weise abgeschoben oder auf andere Weise vom Tray (6) entladen werden.

In den vorbeschriebenen Ausführungsbeispielen schiebt das Klemmelement (32) die Flaschen (3) auf dem zu diesem Zweck im wesentlichen ebenen Trayboden (20) der Schräglage folgend nach unten. Die Trays (6) haben bei diesen Ausführungsbeispielen nur eine einachsige Neigung .

Figur 7 zeigt hierzu eine Variante mit zwei Klemmelementen (32), von denen das eine parallel zur freien Seite (39) ausgerichtete Klemmelement (32) in der vorerwähnten Weise an den parallelen Seitenwänden (19) geführt ist. Das zweite Klemmelement (32) ist hierzu im rechten Winkel angeordnet und wird einerseits an dem ersten Klemmelement (32) und andererseits an der rückwärtigen Seitenwand (19) geführt. Die Klemmelemente (32) haben hierzu eine entsprechende Gestalt mit ineinander greifenden und sich gegenseitig führenden Stangen- oder Wandelemente. Für das zweite Klemmelement (32) ist hierzu eine entsprechend geeignete Zustellvorrichtung (33) an der unteren Seitenwand (19) bzw. am ersten Klemmelement (32) angeordnet. Mit dieser Art der Klemmeinrichtung (31) kann die Flaschenlage (23) an zwei im Winkel zueinander stehenden Seiten geklemmt werden. Bei einer solchen Anordnung ist es insbesondere auch möglich und sinnvoll, den Tray (6) in zwei Achsen schräg zu stellen, und zwar einerseits um den unteren Trayrand (40) und um den im Winkel dazu stehenden und dem zweiten Klemmelement (32) gegenüber liegenden zweiten Trayrand.

Figur 9 bis 11 zeigen eine Variante der Klemmeinrichtung (31) in Verbindung mit einer anderen Bauform der Trays (6). Die Trays (6) sind hier kastenförmig gestaltet und haben den im wesentlichen ebenen, rechteckigen Trayboden (20) und vier umlaufende geschlossene Seitenwände (19), die vorzugsweise eine größere Höhe als die vorkommenden Flaschen (3) haben. Die Trays (6) sind für eine Topbeladung vorgesehen und sind zu den in Figur 9 schematisch dargestellten Traystapeln (45) aufeinander stapelbar. Der oberste Tray (6) kann dabei von einem Deckel (48) verschlossen werden.

Um die Stapelbarkeit zu erleichtern und den Traystapel (45) zu stabilisieren, sind formschlüssige Trayführungen (46) vorhanden. Figur 9 bis 10 zeigen hierfür zwei verschiedene Ausführungsformen. In Figur 9 haben die Trays (6) an der Oberkante der Seitenwände (19) einen eingezogenen Rand, wobei der Trayboden (20) entsprechend weit ausgestellt ist und einen randseitigen Wandvorsprung aufweist, mit dem er über die Seitenwände (19) greift.

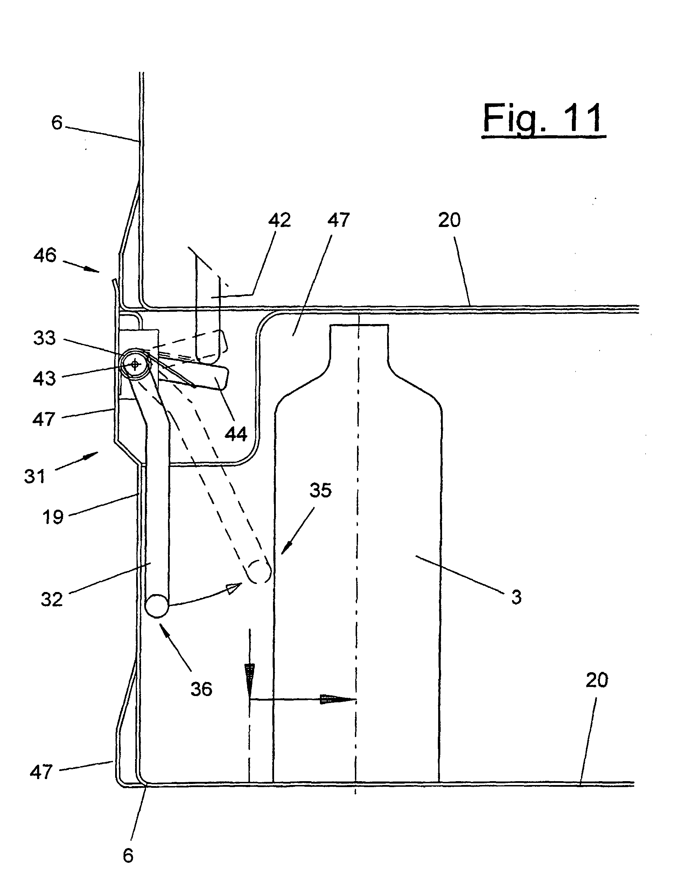

In der Variante von Figur 10 und 11 haben die Seitenwände (19) im unteren Bereich eine seitlich vorstehende Ausbuchtung (47) und besitzen auch im oberen Randbereich eine noch etwas weiter ausgestellte seitliche Ausbuchtung (47) mit einem knapp unterhalb des Seitenwandrandes innen angeordneten Sockel, auf dem der nächsthöhere Tray (6) mit der unteren Ausbuchtung (47) aufsitzen kann. Figur 11 zeigt diese Ausführung.

Die kistenförmigen Trays (6) besitzen eine anders ausgebildete Klemmeinrichtung (31), die in die Trays (6) innenseitig integriert ist. Sie besteht aus einem beweglichen Klemmelement (32), welches hier als schwenkbarer, im wesentlichen U-förmiger Klemmbügel ausgebildet ist, der um eine horizontale Schwenkachse (43) drehbar gelagert ist. Die Achse (43) ist im Bereich der oberen Ausbuchtung (47) an zwei gegenüberliegenden Seitenwänden (19) gehalten. Der Klemmbügel (32) ist abgekröpft und besitzt am oberen Ende einen seitlich vorstehenden Ausleger (44), an dem von außen her eine Betätigungsvorrichtung (42), z.B. ein stiftförmiger Auslöser, von oben her angreift. Figur 3 zeigt schematisch diese im Bereich des Umsetzers (4) stationär angeordnete Betätigungsvorrichtung (42).

Der Klemmbügel (32) wird von einer Zustellvorrichtung (33) beaufschlagt, welche in der gezeigten Ausführungsform als Drehfeder oder Schenkelfeder ausgebildet ist, welche den Klemmbügel (32) mit seiner Querstange in die in Figur 11 gestrichelt dargestellte Arbeitsstellung (35) und in klemmende Anlage an den Flaschen (3) schwenkt. Der Auslöser (42) wirkt der Drehfeder (33) entgegen und bewegt diese zum Beladen des Trays (6) in die mit durchgezogenen Strichen in Figur 11 dargestellte Ruhestellung (36), in der sich der U-förmige Klemmbügel (32) mit seinem längeren unteren Teil im wesentlichen parallel zur vertikalen Seitenwand (19) befindet.

Wie Figur 10 in der Draufsicht verdeutlicht, sind die Flaschen (3) im wesentlichen an den mittleren eingebauchten Bereichen der Seitenwände (19) geführt, während sich die Bügellagerung mit der Feder (33) und dem stiftartigen Ausleger (44) im ausgebauchten nischenartigen Eckbereich des Trays (6) befinden. In Figur 9 ist eine etwas andere und vereinfachte Klemmeinrichtung (31) vorhanden, von der aus Gründen der Übersichtlichkeit nur die auf die Flaschen (3) einwirkende Querstange des Klemmbügels (32) dargestellt ist.

Zum Beladen der kistenförmigen Trays (6) werden die Flaschen (3) in der in Figur 11 durch Pfeile angedeuteten Weise zunächst senkrecht auf den Trayboden (20) abgesetzt und dann seitlich in Anlagestellung an die bereits eingestellten Flaschen geschoben. Diese Schiebbewegung kann in der vorbeschriebenen Weise durch die Greifeinrichtung (14) erfolgen. Alternativ kann aber auch zumindest die letzte eingestellte Flaschenreihe durch die Klemmeinrichtung (31) angestellt werden. Zumindest beim Einladen der letzten Flaschenreihe wird der Auslöser (42) betätigt. Diese Beladungstechnik eignet sich besonders für horizontal ausgerichtete Trays (6), kann aber auch bei schräggestellten Trays (6) eingesetzt werden. Alternativ können die Flaschen (3) aber auch in der in Figur 4, 5 und 13 dargestellten Weise und unter Einsatz der gezeigten Schrägstelleinrichtungen (2) eingeladen werden.

Figur 8 zeigt die bereits eingangs angesprochene Variante der Flaschenbehandlungsanlage (1), die besonders für die vorbeschriebenen Traystapel (45) geeignet ist. Hier wandern die Trays (6) vorzugsweise nicht einzeln auf der Transporteinrichtung (22), sondern werden in Traystapeln (45) im Kreislauf transportiert. Zum Be- und Entladen der Flaschen (3) werden die Traystapel (45) über Trayentstapler (61) entstapelt und nach dem Be- und Entladevorgang wieder durch Traystapler (60) neu zu Traystapeln (45) aufgebaut. Die Traystapler (60) und Trayentstapler (61) befinden sich an kleinen Traykreisläufen (64), die mit Lade- und Entladestellen (62,63) an die Transporteinrichtung (22) angebunden sind. Hierbei empfiehlt es sich, an den Lade- und Entladestellen (62,63) Nebenstrecken (67) der Transporteinrichtung (22) einzurichten, die über vordere und hintere Weichen (66) an die parallel laufende Hauptstrecke (68) angebunden sind. Hierdurch können die Traystapel (45) gezielt zu den Ladeund Entladestellen (62,63) ausgeschleust werden, während die anderen Traystapel (45) ohne Behinderung auf der Hauptstrecke (68) weiter transportiert werden.

Bei der gezeigten Flaschenbehandlungsanlage (1) von Figur 8 sind eine Vielzahl dicht nebeneinander angeordneter Flaschenerzeuger (24) bzw. Blasmaschinen vorhanden, die jeweils über einen Flaschenförderer (8) an einen Umsetzer (5) angeschlossen sind, welcher sich am Traykreislauf (64) befindet. In Kreislaufrichtung sind vor dem Umsetzer (5) ein Trayentstapler (61) und hinter dem Umsetzer (5) ein Traystapler (60) angeordnet. Auf der anderen Seite der schleifenförmigen Transporteinrichtung (22) sind mehrere Bearbeitungsstationen (69) für die Flaschen (3) mit entsprechenden Traykreisläufen (64) angeschlossen. Bei den Bearbeitungsstationen (69) kann es sich um Füllanlagen, Etikettierstationen, Waschanlagen und dergleichen handeln. Die Transporteinrichtung (22) kann auch an ein oder mehrere Palettierer (7) angeschlossen sein. Zudem können durch Rechtecke in Figur 18 symbolisierte Transferstationen mit Aufzügen oder dergleichen vorhanden sein, an denen die Traystapel (45) aus der Anlagenebene ausgeschleust und zu Zwischenlagern oder dergleichen anderen Anlagenteilen in einer anderen Ebene transportiert werden können.

Abwandlungen der gezeigten Klemmeinrichtungen (31) sind in beliebig geeigneter Weise möglich. Zum einen können die Klemmelemente (32) anders ausgebildet und geführt sein. Auch die Zustellvorrichtung (33) kann variieren. Beispielsweise können hierzu Federn oder andere vorzugsweise einfache Antriebsmittel an den Seitenwänden (19) vorhanden sein, die ein parallel zu dieser Seitenwand (19) ausgerichtetes Klemmelement (32) von der Seitenwand (19) wegdrücken. In der bevorzugten einfachen Ausführungsform wird die Zustellvorrichtung (33) durch Antriebsmittel von aussen aktiviert, z.B. durch eine aussenseitige Kulissenführung, die bei Traybewegungen das Klemmelement (32) von der Arbeits- in die Ruhestellung (35,36) und zurück bewegt. Ferner können die Trays (6) anders ausgebildet sein. Ferner kann in der vorerwähnten Weise auch auf die Schrägsteller (21) verzichtet werden.

Darüber hinaus sind auch andere Abwandlungen im Rahmen der Flaschenbehandlungsanlage (1) möglich. Zum einen kann auf die Kippachse (18) und die Schrägstellung an der Greifeinrichtung (14) verzichtet werden. Ferner kann die Kippachse (18) in Abweichung von Figur 2 quer zur Transportrichtung ausgerichtet werden. Dementsprechend ändern sich die Neigungsrichtung des Traybodens (20) und der Schrägsteller (21). Statt des linearen Roboters (11) kann ein beliebiger anderer Manipulator, z.B. ein mehrachsiger Knickarmroboter eingesetzt werden. In einer weiteren Abwandlung können mehrere unterschiedliche Schräglagen des Traybodens (20) bestehen, der dann z.B. eine nach zwei Richtungen geneigte Dachform, ggf. mit einem Scheitel, aufweist. Alternativ kann auch eine kegelige oder prismatische Form vorhanden sein.

In einer weiteren Variante sind auch andere Absetztechniken als die in Figur 4, 5 und 13 gezeigten Verfahrensweisen möglich. Variabel ist ferner die Konstruktion, Anordnung und Zahl der verschiedenen Komponenten der Flaschenbehandlungsanlage (1).

### BEZUGSZEICHENLISTE

- 1: Flaschenbehandlungsanlage
- 2: Schrägstelleinrichtung
- 3: Flasche
- 4: Sammeleinrichtung
- 5: Umsetzer
- 6: Zwischenträger, Tray
- 7: Palettierer
- 8: Flaschenförderer
- 9: Strang
- 10: Endbereich
- 11: Roboter
- 12: Reihenaufnahme, Stautisch
- 13: Flaschenreihe
- 14: Greifeinrichtung, Greifkopf
- 15: Flaschenführung, Reihengreifer
- 16: Schwenkeinrichtung
- 17: Traverse
- 18: Achse, Kippachse
- 19: Seitenwand
- 20: Trayboden
- 21: Schrägsteller, Keil
- 22: Transporteinrichtung, Shuttle
- 23: Flaschenlage
- 24: Flaschenerzeuger, Blasmaschine
- 25: Zwischenlager
- 26: Eingabe
- 27: Ausgabe
- 28: Regalförderzeug
- 29: Vorlauf
- 30: Rücklauf
- 31: Klemmeinrichtung
- 32: Klemmelement, Klemmschieber, Klemmbügel
- 33: Zustellvorrichtung, Feder
- 34: Führung
- 35: Arbeitsstellung
- 36: Ruhestellung
- 37: Anschlag
- 38: Abschiebeöffnung
- 39: freie Seite, Trayrand
- 40: unterer Trayrand
- 41: Zugangsöffnung
- 42: Betätigungsvorrichtung, Auslöser
- 43: Schwenkachse
- 44: Ausleger
- 45: Traystapel
- 46: Trayführung
- 47: Ausbuchtung
- 48: Deckel
- 49: Vereinzelungsvorrichtung, Schnecke
- 50: Gang
- 51: Wand
- 52: Gleitstrecke, Plattenbandförderer
- 53: Zähleinrichtung, Lichtschranke
- 54: Förderrichtung
- 55: Staustrecke
- 56: Kippeinrichtung
- 57: Greifer
- 58: Greifer
- 59: Antrieb
- 60: Traystapler
- 61: Trayentstapler
- 62: Ladestelle
- 63: Entladestelle
- 64: Traykreislauf
- 65: Transporteinrichtung
- 66: Weiche
- 67: Nebenstrecke
- 68: Hauptstrecke
- 69: Bearbeitungsstation, Füllanlage

## Patentansprüche

1. Tray zur Aufnahme und für den Transport von mehreren Flaschen (3), insbesondere leeren PET-Kunststoffflaschen, in einer Flaschenbehandlungsanlage (1), wobei der Tray (6) einen im wesentlichen ebenen Trayboden (20) und mehrere Seitenwände (19) aufweist, **dadurch gekennzeichnet, dass** der Tray (6) eine bewegliche Klemmeinrichtung (31) für die Flaschen (3) aufweist.

2. Tray nach Anspruch 1, **dadurch gekennzeichnet, dass** die Klemmeinrichtung (31) mindestens ein beweglich geführtes (34) Klemmelement (32) und eine Zustellvorrichtung (33) aufweist.

3. Tray nach Anspruch 1 oder 2, **dadurch gekennzeichnet, dass** das Klemmelement (32) als stangen- oder wandförmiger Klemmschieber oder als schwenkbarer Klemmbügel ausgebildet ist.

4. Tray nach Anspruch 1, 2 oder 3, **dadurch gekennzeichnet, dass** das Klemmelement (32) an den Seitenwänden (19) geführt (34) oder gelagert ist.

5. Tray nach einem der Ansprüche 1 bis 4, **dadurch gekennzeichnet, dass** die Klemmeinrichtung (31) mehrere Klemmelemente (32) aufweist, die an den Seitenwänden (19) und aneinander beweglich geführt sind.

6. Tray nach einem der Ansprüche 1 bis 5, **dadurch gekennzeichnet, dass** die Zustellvorrichtung (33) ein oder mehrere auf das Klemmelement (32) einwirkende Federn aufweist.

7. Tray nach einem der Ansprüche 1 bis 6, **dadurch gekennzeichnet, dass** die Zustellvorrichtung (33) das Klemmelement (32) zwischen einer Arbeitsstellung (35) an den Flaschen (3) und einer Ruhestellung (36) bewegt.

8. Tray nach einem der Ansprüche 1 bis 7, **dadurch gekennzeichnet, dass** der Tray (6) an einer Seite eine Abschiebeöffnung (39) aufweist, wobei das Klemmelement (32) parallel zu dieser Seite angeordnet ist und in der Ruhestellung (36) die Abschiebeöffnung (38) freigibt.

9. Tray nach einem der Ansprüche 1 bis 7, **dadurch gekennzeichnet, dass** der Tray (6) hochgezogene, umlaufende Seitenwände (19) für eine Topbeladung und eine integrierte Klemmeinrichtung (31) aufweist.

10. Tray nach Anspruch 9, **dadurch gekennzeichnet, dass** der Tray (6) stapelbar ausgebildet ist und mindestens eine Ausbuchtung (47) zur Bildung einer formschlüssigen Trayführung (46) aufweist.

11. Tray nach einem der Ansprüche 1 bis 10, **dadurch gekennzeichnet, dass** die Trays (6) eine einheitliche Größe für unterschiedliche Flaschenformate aufweisen.

12. Tray nach einem der Ansprüche 1 bis 11, **dadurch gekennzeichnet, dass** der Tray (6) ein oder mehrere Schrägsteller (21) zur Schrägstellung des Traybodens (20) aufweist.

13. Tray nach einem der Ansprüche 1 bis 12, **dadurch gekennzeichnet, dass** die Schrägstellung der Trayböden (20) einen Winkel von ca. 10° bis 20° gegen die Horizontale aufweist.

## Claims

1. Tray for accommodating and transporting a plurality of bottles (3), in particular empty PET plastic bottles, in a bottle treatment plant (1), wherein the tray (6) has a substantially level tray base (20) and a plurality of side walls (19), **characterised in that** the tray (6) has a movable clamping device (31) for the bottles (3).

2. Tray according to Claim 1, **characterised in that** the clamping device (31) has at least one movably guided (34) clamping member (32) and a setting device (33).

3. Tray according to Claim 1 or 2, **characterised in that** the clamping member (32) is constructed in the form of a bar-shaped or wall-shaped clamping slide or as a pivotable clamping bracket.

4. Tray according to Claim 1, 2 or 3, **characterised in that** the clamping member (32) is guided (34) or mounted on the side walls (19).

5. Tray according to one of Claims 1 to 4, **characterised in that** the clamping device (31) has a plurality of clamping members (32) which are guided on the side walls and movably on one another.

6. Tray according to one of Claims 1 to 5, **characterised in that** the setting device (33) has one or more springs acting on the clamping member (32).

7. Tray according to one of Claims 1 to 6, **characterised in that** the setting device (33) moves the clamping member (32) between a working position (35) against the bottles (3) and an idle position (36).

8. Tray according to one of Claims 1 to 7, **characterised in that** the tray (6) has an expelling opening (39) on one side, wherein the clamping member (32) is arranged parallel to this side and in the idle position (36) leaves the expelling opening (38) open.

9. Tray according to one of Claims 1 to 7, **characterised in that** the tray (6) has upswept, all-round side walls (19) for top loading and an integrated clamping device (31).

10. Tray according to Claim 9, **characterised in that** the tray (6) is of stackable construction and has at least one curved projection (47) for forming a form-fitting tray guide (46).

11. Tray according to one of Claims 1 to 10, **characterised in that** the trays (6) have a uniform size for different bottle formats.

12. Tray according to one of Claims 1 to 11, **characterised in that** the tray (6) has one or more incliners (21) for inclining the tray base (20).

13. Tray according to one of Claims 1 to 12, **characterised in that** the inclination of the tray bases (20) has an angle of approximately 10° to 20° to the horizontal.

## Revendications

1. Plateau de réception et de transport de plusieurs bouteilles (3), notamment de bouteilles vides en matière plastique PET, dans une installation (1) de manipulation de bouteilles, le plateau (6) ayant un fond (20) de plateau sensiblement plan et ayant plusieurs parois (19) latérales, **caractérisé en ce que** le plateau (6) a un dispositif (31) mobile de serrage des bouteilles (3).

2. Plateau suivant la revendication 1, **caractérisé en ce que** le dispositif (31) de serrage a au moins un élément (32) de serrage guidé (34) de manière mobile et un dispositif (33) de déplacement.

3. Plateau suivant la revendication 1 ou 2 **caractérisé en ce que** l'élément (32) de serrage est constitué en tiroirs de serrage en forme de barre ou de paroi ou en étriers de serrage basculants.

4. Plateau suivant la revendication 1, 2 ou 3, **caractérisé en ce que** l'élément (32) de serrage est guidé (34) ou est monté sur les parois (19) latérales.

5. Plateau suivant l'une des revendications 1 à 4, **caractérisé en ce que** le dispositif (31) de serrage a plusieurs éléments (32) de serrage, qui sont montés mobiles l'un par rapport à l'autre sur les parois (19) latérales.

6. Plateau suivant l'une des revendications 1 à 5, **caractérisé en ce que** le dispositif (33) de déplacement comporte un ressort ou plusieurs ressorts agissant sur l'élément (32) de serrage.

7. Plateau suivant l'une des revendications 1 à 6, **caractérisé en ce que** le dispositif (33) de déplacement déplace l'élément (32) de serrage entre une position (35) de travail sur les bouteilles (3) et une position (36) de repos.

8. Plateau suivant l'une des revendications 1 à 7, **caractérisé en ce que** le plateau (6) a, d'un côté, une ouverture (39) de sortie, l'élément (32) de serrage étant disposé parallèlement à ce côté et dégageant en la position (36) de repos l'ouverture (36) de sortie.

9. Plateau suivant l'une des revendications 1 à 7, **caractérisé en ce que** le plateau (6) a des parois (19) latérales relevées et faisant le tour pour un chargement par le sommet et un dispositif (31) intégré de serrage.

10. Plateau suivant la revendication 9, **caractérisé en ce que** le plateau (6) est constitué de manière à pouvoir être empilé et a au moins un bossage (47) de formation d'un guidage (46) à complémentarité de forme du plateau.

11. Plateau suivant l'une des revendications 1 à 10, **caractérisé en ce que** les plateaux (6) ont une dimension uniforme pour des formats de bouteille qui sont différents.

12. Plateau suivant l'une des revendications 1 à 11, **caractérisé en ce que** le plateau (6) a un ou plusieurs éléments (21) d'inclinaison pour mettre en position inclinée le fond (20) du plateau.

13. Plateau suivant l'une des revendications 1 à 12, **caractérisé en ce que** l'inclinaison des fonds (20) du plateau fait un angle avec l'horizontale d'environ 10° à 20°.
